# EUROPEAN PATENT SPECIFICATION

(11) **EP 3 650 236 B1**
(45) Date of publication and mention of the grant of the patent: **06.11.2024**
(21) Application number: 18828399.8
(22) Date of filing: 06.03.2018
(51) Int. Cl.: B42D 25/324, B42D 25/351, B42D 25/373, B42D 25/305, B42D 25/425, B42D 25/45, B44C 1/17, B60R 13/10, B41M 3/14, B41M 5/035, B44F 1/08

(54) **ANTI-COUNTERFEITING HOT-STAMPING FILM AND MANUFACTURING METHOD THEREFOR, AND MOTOR VEHICLE LICENSE PLATE**
FÄLSCHUNGSSICHERE HEISSPRÄGEFOLIE UND HERSTELLUNGSVERFAHREN DAFÜR SOWIE KRAFTFAHRZEUGKENNZEICHEN
FILM D'ESTAMPAGE À CHAUD ANTI-CONTREFAÇON ET SON PROCÉDÉ DE FABRICATION, ET PLAQUE D'IMMATRICULATION DE VÉHICULE À MOTEUR

(30) Priority: 05.07.2017 CN 201710543818
(43) Date of publication of application: 13.05.2020
(73) Proprietor: SVG Tech Group Co., Ltd, Industrial Park Suzhou, Jiangsu 215123 (CN); Soochow University, Suzhou, Jiangsu 215123 (CN)
(72) Inventor: ZHU, Haoshu, Suzhou Jiangsu 215123 (CN); YE, Rui, Suzhou Jiangsu 215123 (CN); SUN, Yingchun, Suzhou Jiangsu 215123 (CN); ZHONG, Junfeng, Suzhou Jiangsu 215123 (CN); REN, Jiaan, Suzhou Jiangsu 215123 (CN); XIA, Wenguang, Suzhou Jiangsu 215123 (CN); CHEN, Linsen, Suzhou Jiangsu 215123 (CN); ZHU, Zhijian, Suzhou Jiangsu 215123 (CN)
(74) Representative: Zaboliene, Reda
(86) International application number: PCT/CN2018/078122
(87) International publication number: WO 2019/007092

(56) References cited:
- EP-A1- 1 193 511
- EP-A1- 2 151 328
- WO-A1-00/16972
- WO-A1-2005/100096
- WO-A1-2010/112151
- WO-A1-2012/137002
- CN-A- 1 950 240
- CN-A- 107 310 288
- CN-U- 204 712 695
- CN-U- 206 968 220
- GB-A- 2 339 950
- JP-A- 2008 100 421
- US-A- 5 665 475

## Description

### TECHNICAL FIELD

The present invention relates to the technical field of optical anti-counterfeiting, and in particular, to an anti-counterfeiting hot stamping film, a manufacturing method therefor, and a motor vehicle license plate.

### BACKGROUND ART

Due to various existing illegal phenomena, such as counterfeiting, fake license plate, etc., it is necessary to provide a hot stamping film that is easy to detect and difficult to counterfeit, so as to effectively implement anti-counterfeiting.

Chinese patent application No. 200580014348.5 discloses an embossed film. The embossed film includes a transparent separation layer, an opaque decorative layer, a protective layer, a light-changing layer and a light reflective layer. The light-changing layer disposed on the light reflective layer, the protective layer is disposed on the light-changing layer, the decorative layer is disposed on the protective layer, and the separation layer is disposed on the decorative layer. The decorative layer has a plurality of interruptions spaced apart from each other, and the anti-counterfeiting information on the light-changing layer can be seen through the interruptions. The proportion of the layout area of the anti-counterfeiting information on the light-changing layer needs to be less than 20% of the entire area of the embossed film, otherwise the overall effect will be affected, that is, the anti-counterfeiting information on the light-changing layer cannot be arranged in large area. Since the ratio of the anti-counterfeiting information is relatively small, after the embossed film is cut according to the number on the corresponding license plate, the embossed film after being cut probably has no anti-counterfeiting information and the anti-counterfeiting effect is not achieved.

Particularly, documents of WO2005100096A1, EP2151328A1, EP1193511A1, WO2010112151A1, and WO2012137002A1 have disclosed some relevant stamping films according to the state of the art.

### TECHNICAL PROBLEM

The anti-counterfeiting information on the existing light-changing layer cannot be arranged in large area. Since the ratio of the anti-counterfeiting information is relatively small, after the embossed film is cut according to the number on the corresponding license plate, the embossed film after being cut probably has no anti-counterfeiting information and the anti-counterfeiting effect is not achieved.

### TECHNICAL SOLUTION

In view of the above, the present invention provides an anti-counterfeiting hot stamping film, which is not limited by an area ratio, can arrange the anti-counterfeiting information in large area, does not exhibit anti-counterfeiting marks without illumination, does not affect the basic functions of the license plate, and has a good overall visual effect.

An anti-counterfeiting hot stamping film according to the invention is defined in claim 1.

In an embodiment of the present invention, the anti-counterfeiting information layer is disposed on the first color layer, the optical protective layer is disposed on the anti-counterfeiting information layer, and the second color layer is disposed on the optical protective layer.

In an embodiment of the present invention, the anti-counterfeiting information layer is provided with a plurality of micro/nano structures, and the micro/nano structures are invisible watermarks with an anti-counterfeiting effect.

In an embodiment of the present invention, the optical protective layer has a nanoscale thickness, the optical protective layer is penetrable to light and is able to reflect light.

In an embodiment of the present invention, the anti-counterfeiting hot stamping film further includes an adhesive layer disposed on the second color layer.

In an embodiment of the present invention, the anti-counterfeiting hot stamping film further includes a base film layer, a release layer and a protective layer. The release layer is disposed on the base film layer, the protective layer is disposed on the release layer, and the first color layer is disposed on the protective layer.

In an embodiment of the present invention, the first color layer is formed of one pigment or formed of a plurality of pigments, the second color layer is formed of one pigment or a plurality of pigments.

In an embodiment of the present invention, the anti-counterfeiting hot stamping film further includes a base film layer and a release layer. The release layer is disposed on the base film layer, and the first color layer is disposed on the release layer.

In an embodiment of the present invention, the first color layer is formed by mixing a pigment or a plurality of pigments with a protective material, the second color layer is formed of one pigment or a plurality of pigments.

In an embodiment of the present invention, the color of the second color layer is darker than the color of the first color layer.

The present invention also provides a method for manufacturing an anti-counterfeiting hot stamping film as defined in claim 11.

The present invention also provides a further method for manufacturing an anti-counterfeiting hot stamping film as defined in claim 12.

The present invention also provides a motor vehicle license plate including the above anti-counterfeiting hot stamping film.

### BENEFICIAL EFFECT

In the above anti-counterfeiting hot stamping film, the anti-counterfeiting information layer is not limited by an area ratio, such that the anti-counterfeiting information can be arranged in large area to achieve an anti-counterfeiting effect. Furthermore, the anti-counterfeiting hot stamping film does not exhibit the anti-counterfeiting marks without illumination, does not affect the basic functions of the license plate, does not disturb the integrity, and has better overall visual effect.

### BRIEF DESCRIPTION OF THE DRAWINGS

FIG. 1 is a schematic view showing the structure of an anti-counterfeiting hot stamping film according to a first embodiment of the present invention.
FIG. 2 is a schematic view showing the structure of an anti-counterfeiting hot stamping film according to a second embodiment of the present invention.
FIG. 3 is a flow chart of a method for manufacturing an anti-counterfeiting hot stamping film according to a third embodiment of the present invention.
FIG. 4 is a flow chart of a method for manufacturing an anti-counterfeiting hot stamping film according to a fourth embodiment of the present invention.

### DETAILED DESCRIPTION OF PREFERRED EMBODIMENTS

In order to make the objects, technical solutions and advantages of the present invention more apparent, the embodiments of the present invention will be further described with reference to the accompanying drawings.

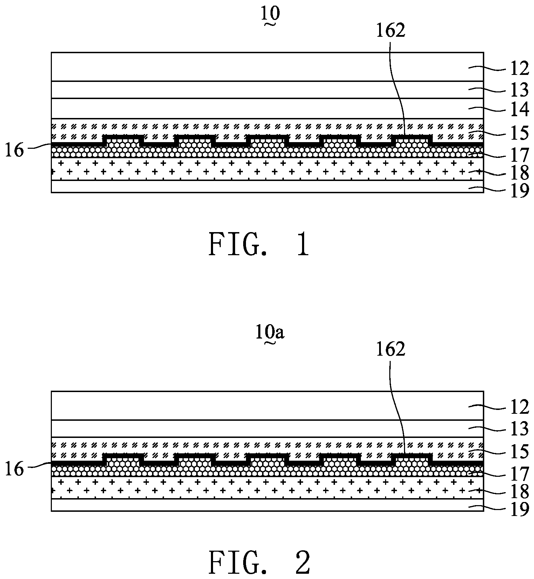

FIG. 1 is a schematic view showing the structure of an anti-counterfeiting hot stamping film according to a first embodiment of the present invention. As shown in FIG. 1, in the embodiment, the anti-counterfeiting hot stamping film 10 includes a base film layer 12, a release layer 13, a protective layer 14, a first color layer 15, an anti-counterfeiting information layer 16, an optical protective layer 17, a second color layer 18, and an adhesive layer 19.

The base film layer 12 is a transparent film. In this embodiment, the base film layer 12 is formed of a polyester film, but is not limited thereto.

The release layer 13 is disposed on the base film layer 12, and the release layer 13 is a transparent layer.

The protective layer 14 is disposed on the release layer 13, and the protective layer 14 is a transparent layer for protecting the first color layer 15, the anti-counterfeiting information layer 16, the optical protective layer 17, the second color layer 18 and the adhesive layer 19. In this embodiment, the protective layer 14 also has a release effect, which can assist the release layer 13 to be peeled off from the base film layer 12 after hot stamping.

The first color layer 15 is disposed on the protective layer 14. The first color layer 15 is light-penetrable, and is penetrable to light only under illumination (e.g., directly illuminated by light) and impenetrable in the absence of light. In this embodiment, the first color layer 15 exhibits at least one color, that is, the first color layer 15 may be formed of one pigment or formed of a plurality of pigments. Preferably, the first color layer 15 exhibits a lighter black color, i.e., the same as the color of the number on the motor vehicle license plate. Therefore, when the anti-counterfeiting hot stamping film 10 of this embodiment is hot stamped on the motor vehicle license plate, the integrity of the motor vehicle license plate is not disturbed.

The anti-counterfeiting information layer 16 is disposed on the first color layer 15. The anti-counterfeiting information layer 16 is provided with a plurality of micro/nano structures 162, which are invisible watermarks with an anti-counterfeiting effect. The micro/nano structures 162 can exhibit different anti-counterfeiting effects, such as emboss, invisibility, dynamic three-dimensional effect, etc. The micro/nano structures 162 can be made as patterns, words, letters, characters, numbers, or a combination of these symbols. In this embodiment, since the first color layer 15 only transmits light under illumination, the anti-counterfeiting hot stamping film 10 does not exhibit anti-counterfeiting marks without illumination and the anti-counterfeiting hot stamping film 10 is black, so that the basic functions of the motor vehicle license plate are not affected, the integrity of the motor vehicle license plate is not disturbed, and its overall visual effect is better. In addition, since the micro/nano structures 162 of the anti-counterfeiting information layer 16 have the anti-counterfeiting effect of invisible watermarks, the micro/nano structures 162 can be recognized only under illumination from a certain angle. The recognition is simple, the setting of the micro/nano structures 162 is not limited by an area ratio, the micro/nano structures 162 can be arranged in large area, to effectively prevent the occurrence of illegal phenomena such as counterfeiting license plates.

The optical protective layer 17 is disposed on the anti-counterfeiting information layer 16. In this embodiment, the optical protective layer 17 is made of a metal or a metal compound. The optical protective layer 17 can increase the effect of the anti-counterfeiting information layer 16 and protect the anti-counterfeiting information layer 16 from damage. The thickness of the optical protective layer 17 is relatively thin (nanoscale), so that the optical protective layer 17 can transmit light and reflect light. When the light passes through the micro/nano structures 162 of the anti-counterfeiting information layer 16, the light is reflected back by the optical protective layer 17, such that the optical protective layer 17 not only can protect the anti-counterfeiting information layer 16, but also can enhance the reflective effect and highlight the anti-counterfeiting information. It is noted that in order to increase the adhesion of the optical protective layer 17, the surface of the optical protective layer 17 away from the anti-counterfeiting information layer 16 is subjected to surface treatment such as corona or ion electricity to make the surface at this side of the optical protective layer 17 to be roughening.

The second color layer 18 is disposed on the optical protective layer 17. The second color layer 18 is impenetrable to light, that is, the second color layer 18 exhibits light impenetrability both under illumination and without illumination. In this embodiment, the second color layer 18 exhibits at least one color, that is, the second color layer 18 may be formed of one pigment or a plurality of pigments. Preferably, the second color layer 18 exhibits a darker black color. That is, the color of the second color layer 18 is darker than the color of the first color layer 15.

The adhesive layer 19 is disposed on the second color layer 18. In this embodiment, the adhesive layer 19 is a hot melting layer, that is, it will melt under high temperature, so that the anti-counterfeiting hot stamping film 10 is conveniently hot stamped on the motor vehicle license plate.

FIG. 2 is a schematic view showing the structure of an anti-counterfeiting hot stamping film according to a second embodiment of the present invention. As shown in FIG. 2, in this embodiment, the anti-counterfeiting hot stamping film 10a includes a base film layer 12, a release layer 13, a first color layer 15, an anti-counterfeiting information layer 16, an optical protective layer 17, a second color layer 18, and an adhesive layer 19.

The base film layer 12 is a transparent film. In this embodiment, the base film layer 12 is formed of a polyester film, but is not limited thereto.

The release layer 13 is disposed on the base film layer 12, and the release layer 13 is a transparent layer.

The first color layer 15 is disposed on the release layer 13. The first color layer 15 is light-penetrable, and is penetrable to light only under illumination (e.g., directly illuminated by light) and impenetrable in the absence of light. In this embodiment, the first color layer 15 is formed by mixing protective material and pigment, that is, the first color layer 15 in this embodiment not only can protect the anti-counterfeiting information layer 16, the optical protective layer 17, the second color layer 18 and the adhesive layer 19, at the same time, the first color layer 15 also has a release effect, which can assist the release layer 13 to be peeled off from the base film layer 12 after hot stamping. In this embodiment, the first color layer 15 exhibits at least one color, that is, the first color layer 15 may be formed by mixing a pigment or a plurality of pigments with a protective material. Preferably, the first color layer 15 exhibits a lighter black color, i.e., the same as the color of the number on the motor vehicle license plate. Therefore, when the anti-counterfeiting hot stamping film 10a of this embodiment is hot stamped on the motor vehicle license plate, the integrity of the motor vehicle license plate is not disturbed.

The anti-counterfeiting information layer 16 is disposed on the first color layer 15. The anti-counterfeiting information layer 16 is provided with a plurality of micro/nano structures 162, which are invisible watermarks with an anti-counterfeiting effect. The micro/nano structures 162 can exhibit different anti-counterfeiting effects, such as emboss, invisibility, dynamic three-dimensional effect, etc. The micro/nano structures 162 can be made as patterns, words, letters, characters, numbers, or a combination of these symbols. In this embodiment, since the first color layer 15 transmits light only under illumination, the anti-counterfeiting hot stamping film 10a does not exhibit anti-counterfeiting marks without illumination and the anti-counterfeiting hot stamping film 10a is black, so that the basic functions of the motor vehicle license plate are not affected, the integrity of the motor vehicle license plate is not disturbed, and its overall visual effect is better. In addition, since the micro/nano structures 162 of the anti-counterfeiting information layer 16 have the anti-counterfeiting effect of invisible watermarks, the micro/nano structures 162 can be recognized only under illumination from a certain angle. The recognition is simple, the setting of the micro/nano structures 162 is not limited by an area ratio, the micro/nano structures 162 can be arranged in large area, to effectively prevent the occurrence of illegal phenomena such as counterfeiting license plates.

The optical protective layer 17 is disposed on the anti-counterfeiting information layer 16. In this embodiment, the optical protective layer 17 is made of a metal or a metal compound. The optical protective layer 17 can increase the effect of the anti-counterfeiting information layer 16 and protect the anti-counterfeiting information layer 16 from damage. The thickness of the optical protective layer 17 is relatively thin (nanoscale), so that the optical protective layer 17 can transmit light and reflect light. When the light passes through the micro/nano structures 162 of the anti-counterfeiting information layer 16, the light is reflected back by the optical protective layer 17, such that the optical protective layer 17 not only can protect the anti-counterfeiting information layer 16, but also can enhance the reflective effect and highlight the anti-counterfeiting information. It is noted that in order to increase the adhesion of the optical protective layer 17, the surface of the optical protective layer 17 away from the anti-counterfeiting information layer 16 is subjected to surface treatment such as corona or ion electricity to make the surface at this side of the optical protective layer 17 to be roughening.

The second color layer 18 is disposed on the optical protective layer 17. The second color layer 18 is impenetrable to light, that is, the second color layer 18 exhibits light impenetrability both under illumination and without illumination. In this embodiment, the second color layer 18 exhibits at least one color, that is, the second color layer 18 may be formed of one pigment or a plurality of pigments. Preferably, the second color layer 18 exhibits a darker black color. That is, the color of the second color layer 18 is darker than the color of the first color layer 15.

The adhesive layer 19 is disposed on the second color layer 18. In this embodiment, the adhesive layer 19 is a hot melting layer, that is, it will melt under high temperature, so that the anti-counterfeiting hot stamping film 10 is conveniently hot stamped on the motor vehicle license plate.

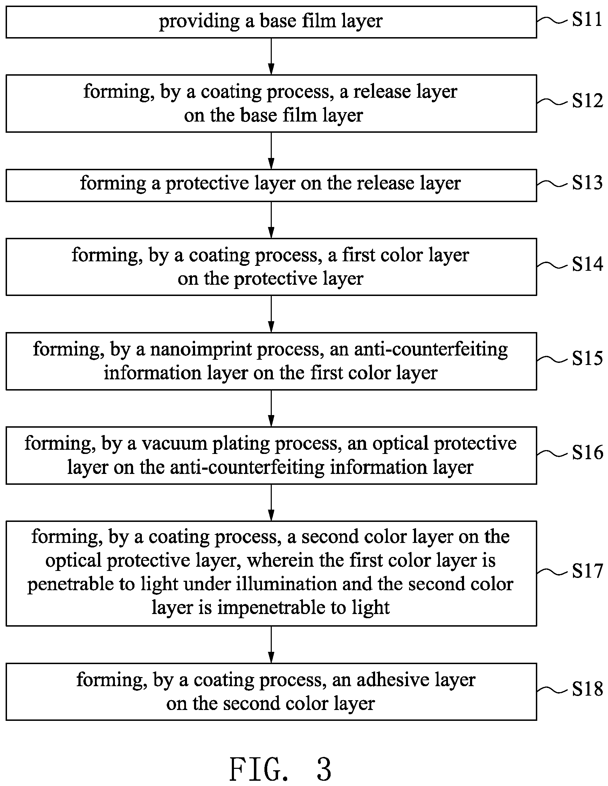

FIG. 3 is a flow chart of a method according to a third embodiment of the present invention, for manufacturing the anti-counterfeiting hot stamping film 10 shown in FIG. 1. Referring to FIG. 1 and FIG. 3, the method for manufacturing the anti-counterfeiting hot stamping film includes:

Step S11: a base film layer 12 is provided; specifically, the base film layer 12 is a transparent film, and the base film layer 12 is formed of a polyester film.

Step S12: a release layer 13 is formed on the base film layer 12 by a coating process; specifically, the release layer 13 is a transparent layer.

Step S13: a protective layer 14 is formed on the release layer 13; specifically, the protective layer 14 is a transparent layer for protecting the underlying coating. In this embodiment, the protective layer 14 also has a release effect, which can assist the release layer 13 to be peeled off from the base film layer 12 after hot stamping.

Step S14: a first color layer 15 is formed on the protective layer 14 by a coating process; specifically, the first color layer 15 is light-penetrable, and is penetrable to light only under illumination (e.g., directly illuminated by light) and impenetrable in the absence of light. In this embodiment, the first color layer 15 exhibits at least one color, that is, the first color layer 15 may be formed of one pigment or formed of a plurality of pigments. Preferably, the first color layer 15 exhibits a lighter black color, i.e., the same as the color of the number on the motor vehicle license plate. Therefore, when the anti-counterfeiting hot stamping film 10 of this embodiment is hot stamped on the motor vehicle license plate, the integrity of the motor vehicle license plate is not disturbed.

Step S15: an anti-counterfeiting information layer 16 is formed on the first color layer 15 by a nanoimprint process; specifically, the anti-counterfeiting information layer 16 has a plurality of micro/nano structures 162, and the micro/nano structures 162 are invisible watermarks with an anti-counterfeiting effect. The micro/nano structures 162 can exhibit different anti-counterfeiting effects, such as emboss, invisibility, dynamic three-dimensional effect, etc. The micro/nano structures 162 can be made as patterns, words, letters, characters, numbers, or a combination of these symbols. In this embodiment, since the first color layer 15 transmits light only under illumination, the anti-counterfeiting hot stamping film 10 does not exhibit anti-counterfeiting marks without illumination and the anti-counterfeiting hot stamping film 10 is black, so that the basic functions of the motor vehicle license plate are not affected, the integrity of the motor vehicle license plate is not disturbed, and its overall visual effect is better. In addition, since the micro/nano structures 162 of the anti-counterfeiting information layer 16 have the anti-counterfeiting effect of invisible watermarks, the micro/nano structures 162 can be recognized only under illumination from a certain angle. The recognition is simple, the setting of the micro/nano structures 162 is not limited by an area ratio, the micro/nano structures 162 can be arranged in large area, to effectively prevent the occurrence of illegal phenomena such as counterfeiting license plates.

Step S16: an optical protective layer 17 is formed on the anti-counterfeiting information layer 16 by a vacuum plating process. In this embodiment, the optical protective layer 17 is made of a metal or a metal compound. The optical protective layer 17 can increase the effect of the anti-counterfeiting information layer 16 and protect the anti-counterfeiting information layer 16 from damage. The thickness of the optical protective layer 17 is relatively thin (nanoscale), so that the optical protective layer 17 can transmit light and reflect light. When the light passes through the micro/nano structures 162 of the anti-counterfeiting information layer 16, the light is reflected back by the optical protective layer 17, such that the optical protective layer 17 not only can protect the anti-counterfeiting information layer 16, but also can enhance the reflective effect and highlight the anti-counterfeiting information. It is noted that in order to increase the adhesion of the optical protective layer 17, the surface of the optical protective layer 17 away from the anti-counterfeiting information layer 16 is subjected to surface treatment such as corona or ion electricity to make the surface at this side of the optical protective layer 17 to be roughening.

Step S17: a second color layer 18 is formed on the optical protective layer 17 by using a coating process, wherein the first color layer 15 is penetrable to light only under illumination and the second color layer 18 is impenetrable to light; specifically, the second color layer 18 exhibits at least one color, that is, the second color layer 18 may be formed of one pigment or a plurality of pigments. Preferably, the second color layer 18 exhibits a darker black color. That is, the color of the second color layer 18 is darker than the color of the first color layer 15.

Step S18: an adhesive layer 19 is formed on the second color layer 18 by a coating process. Specifically, the adhesive layer 19 is a hot melting layer, that is, it will melt under high temperature, so that the anti-counterfeiting hot stamping film 10 is conveniently hot stamped on the motor vehicle license plate.

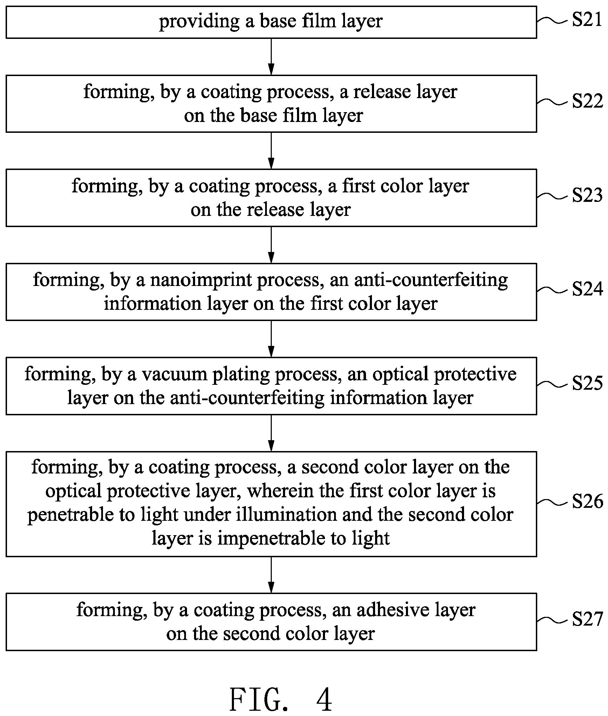

FIG. 4 is a flow chart of a method according to a fourth embodiment of the present invention, for manufacturing the anti-counterfeiting hot stamping film 10a shown in FIG. 2. Referring to FIG. 2 and FIG. 4, the method for manufacturing the anti-counterfeiting hot stamping film includes:

Step S21: a base film layer 12 is provided; specifically, the base film layer 12 is a transparent film, and the base film layer 12 is formed of a polyester film.

Step S22: a release layer 13 is formed on the base film layer 12 by a coating process; specifically, the release layer 13 is a transparent layer.

Step S23: a first color layer 15 is formed on the release layer 13 by a coating process; specifically, the first color layer 15 is light-penetrable, and is penetrable to light only under illumination (e.g., directly illuminated by light) and impenetrable in the absence of light. The first color layer 15 is formed by mixing protective material and pigment. Thus, the first color layer 15 not only can protect the underlying coating, at the same time, the first color layer 15 also has a release effect, which can assist the release layer 13 to be peeled off from the base film layer 12 after hot stamping. In this embodiment, the first color layer 15 exhibits at least one color, that is, the first color layer 15 may be formed by mixing a pigment or a plurality of pigments with a protective material. Preferably, the first color layer 15 exhibits a lighter black color, i.e., the same as the color of the number on the motor vehicle license plate. Therefore, when the anti-counterfeiting hot stamping film 10a of this embodiment is hot stamped on the motor vehicle license plate, the integrity of the motor vehicle license plate is not disturbed.

Step S24: an anti-counterfeiting information layer 16 is formed on the first color layer 15 by a nanoimprint process; specifically, the anti-counterfeiting information layer 16 has a plurality of micro/nano structures 162, and the micro/nano structures 162 are invisible watermarks with an anti-counterfeiting effect. The micro/nano structures 162 can exhibit different anti-counterfeiting effects, such as emboss, invisibility, dynamic three-dimensional effect, etc. The micro/nano structures 162 can be made as patterns, words, letters, characters, numbers, or a combination of these symbols. In this embodiment, since the first color layer 15 transmits light only under illumination, the anti-counterfeiting hot stamping film 10a does not exhibit anti-counterfeiting marks without illumination and the anti-counterfeiting hot stamping film 10a is black, so that the basic functions of the motor vehicle license plate are not affected, the integrity of the motor vehicle license plate is not disturbed, and its overall visual effect is better. In addition, since the micro/nano structures 162 of the anti-counterfeiting information layer 16 have the anti-counterfeiting effect of invisible watermarks, the micro/nano structures 162 can be recognized only under illumination from a certain angle. The recognition is simple, the setting of the micro/nano structures 162 is not limited by an area ratio, the micro/nano structures 162 can be arranged in large area, to effectively prevent the occurrence of illegal phenomena such as counterfeiting license plates.

Step S25: an optical protective layer 17 is formed on the anti-counterfeiting information layer 16 by a vacuum plating process. In this embodiment, the optical protective layer 17 is made of a metal or a metal compound. The optical protective layer 17 can increase the effect of the anti-counterfeiting information layer 16 and protect the anti-counterfeiting information layer 16 from damage. The thickness of the optical protective layer 17 is relatively thin (nanoscale), so that the optical protective layer 17 can transmit light and reflect light. When the light passes through the micro/nano structures 162 of the anti-counterfeiting information layer 16, the light is reflected back by the optical protective layer 17, such that the optical protective layer 17 not only can protect the anti-counterfeiting information layer 16, but also can enhance the reflective effect and highlight the anti-counterfeiting information. It is noted that in order to increase the adhesion of the optical protective layer 17, the surface of the optical protective layer 17 away from the anti-counterfeiting information layer 16 is subjected to surface treatment such as corona or ion electricity to make the surface at this side of the optical protective layer 17 to be roughening.

Step S26: a second color layer 18 is formed on the optical protective layer 17 by using a coating process, wherein the first color layer 15 is penetrable to light only under illumination and the second color layer 18 is impenetrable to light; specifically, the second color layer 18 exhibits at least one color, that is, the second color layer 18 may be formed of one pigment or a plurality of pigments. Preferably, the second color layer 18 exhibits a darker black color. That is, the color of the second color layer 18 is darker than the color of the first color layer 15.

Step S27: an adhesive layer 19 is formed on the second color layer 18 by a coating process. Specifically, the adhesive layer 19 is a hot melting layer, that is, it will melt under high temperature, so that the anti-counterfeiting hot stamping film 10a is conveniently hot stamped on the motor vehicle license plate.

The anti-counterfeiting hot stamping film 10, 10a of the present invention includes a first color layer 15 penetrable to light under illumination and a second color layer 18 impenetrable to light, the first color layer 15 and the second color layer 18 are oppositely disposed, with the anti-counterfeiting information layer 16 and the optical protective layer 17 being disposed between the first color layer 15 and the second color layer 18. The anti-counterfeiting information layer 16 of the anti-counterfeiting hot stamping film 10, 10a is not limited by an area ratio, such that the anti-counterfeiting information can be arranged in large area to achieve an anti-counterfeiting effect. Further, the anti-counterfeiting hot stamping film 10, 10a does not exhibit anti-counterfeiting marks without illumination, does not affect the basic functions of the license plate, does not disturb the integrity, and has a good overall visual effect.

In addition, the anti-counterfeiting hot stamping film 10, 10a of the present invention is hot stamped, which has higher production efficiency and no flowing liquid than the previous screen printing technique, ensuring high quality and environmental protection.

The present invention also provides a motor vehicle license plate, which includes the above-mentioned anti-counterfeiting hot stamping film 10, 10a. For the structure of a motor vehicle license plate, reference can be made to prior art, and details thereof are not described herein again.

The preferred embodiments of the present invention have been described in detail above with reference to the drawings, but the present invention is not limited to the specific details of the embodiments described above, and various simple modifications can be made to the technical solutions of the present invention within the scope of the present invention. The specific technical features described in the above specific embodiments may be combined in any suitable manner without contradiction. In order to avoid unnecessary repetition, the various possible combinations are not further described in present invention.

### Industrial applicability

The anti-counterfeiting hot stamping film of the present invention includes a first color layer penetrable to light under illumination and a second color layer impenetrable to light, the first color layer and the second color layer are oppositely disposed, with the anti-counterfeiting information layer and the optical protective layer being disposed between the first color layer and the second color layer. The anti-counterfeiting information layer of the anti-counterfeiting hot stamping film is not limited by an area ratio, such that the anti-counterfeiting information can be arranged in large area to achieve an anti-counterfeiting effect. Further, the anti-counterfeiting hot stamping film does not exhibit anti-counterfeiting marks without illumination, does not affect the basic functions of the license plate, does not disturb the integrity, and has a good overall visual effect.

## Claims

1. An anti-counterfeiting hot stamping film comprising a first color layer (15), an anti-counterfeiting information layer (16), an optical protective layer (17) and a second color layer (18), the first color layer (15) and the second color layer (18) are disposed oppositely, the anti-counterfeiting information layer (16) and the optical protection layer (17) are disposed between the first color layer (15) and the second color layer (18); wherein each of the first color layer (15), the anti-counterfeiting information layer (16), the optical protective layer (17) and the second color layer (18) is provided on the full surface area of the anti-counterfeiting hot stamping film, the first color layer (15) is penetrable to light only under illumination and impenetrable in the absence of light, and the second color layer (18) is impenetrable to light both under illumination and without illumination.

2. The anti-counterfeiting hot stamping film according to claim 1, wherein the anti-counterfeiting information layer (16) is disposed on the first color layer (15), the optical protective layer (17) is disposed on the anti-counterfeiting information layer (16), the second color layer (18) is disposed on the optical protective layer (17).

3. The anti-counterfeiting hot stamping film according to claim **2,** wherein the anti-counterfeiting information layer (16) is provided with a plurality of micro/nano structures (162), the micro/nano structures (162) are invisible watermarks with an anti-counterfeiting effect.

4. The anti-counterfeiting hot stamping film according to claim 3, wherein the optical protective layer (17) has a nanoscale thickness, the optical protective layer (17) is penetrable to light and is able to reflect light.

5. The anti-counterfeiting hot stamping film according to claim **4,** wherein the anti-counterfeiting hot stamping film further comprises an adhesive layer (19) disposed on the second color layer (18).

6. The anti-counterfeiting hot stamping film according to claim 1, wherein the anti-counterfeiting hot stamping film further comprises a base film layer (12), a release layer (13) and a protective layer (14), the release layer (13) is disposed on the base film layer (12), the protective layer (14) is disposed on the release layer (13), and the first color layer (15) is disposed on the protective layer (14).

7. The anti-counterfeiting hot stamping film according to claim 6, wherein the first color layer (15) is formed of one pigment or formed of a plurality of pigments, the second color layer (18) is formed of one pigment or a plurality of pigments.

8. The anti-counterfeiting hot stamping film according to claim 1, wherein the anti-counterfeiting hot stamping film further comprises a base film layer (12) and a release layer (13), the release layer (13) is disposed on the base film layer (12), and the first color layer (15) is disposed on the release layer (13).

9. The anti-counterfeiting hot stamping film according to claim 8, wherein the first color layer (15) is formed by mixing a pigment or a plurality of pigments with a protective material, the second color layer (18) is formed of one pigment or a plurality of pigments.

10. The anti-counterfeiting hot stamping film according to claim 1, wherein the color of the second color layer (18) is darker than the color of the first color layer (15).

11. A method for manufacturing an anti-counterfeiting hot stamping film according to claim 6, comprising:
providing a base film layer (12);
forming a release layer (13) on the base film layer (12);
forming a protective layer (14) on the release layer (13);
forming a first color layer (15) on the protective layer (14);
forming an anti-counterfeiting information layer (16) on the first color layer (15);
forming an optical protective layer (17) on the anti-counterfeiting information layer (16);
forming a second color layer (18) on the optical protective layer (17), wherein
each of the first color layer (15), the anti-counterfeiting information layer (16), the optical protective layer (17) and the second color layer (18) is provided on the full surface area of the anti-counterfeiting hot stamping film, the first color layer (15) is penetrable to light only under illumination and impenetrable in the absence of light, and the second color layer (18) is impenetrable to light both under illumination and without illumination; and
forming an adhesive layer (19) on the second color layer (18).

12. A method for manufacturing an anti-counterfeiting hot stamping film according to claim **8**, comprising:
providing a base film layer (12);
forming a release layer (13) on the base film layer (12);
forming a first color layer (15) on the release layer (13);
forming an anti-counterfeiting information layer (16) on the first color layer (15);
forming an optical protective layer (17) on the anti-counterfeiting information layer (16);
forming a second color layer (18) on the optical protective layer (17), wherein
each of the first color layer (15), the anti-counterfeiting information layer (16), the optical protective layer (17) and the second color layer (18) is provided on the full surface area of the anti-counterfeiting hot stamping film, the first color layer (15) is penetrable to light only under illumination and impenetrable in the absence of light, and the second color layer (18) is impenetrable to light both under illumination and without illumination; and
forming an adhesive layer (19) on the second color layer (18).

13. A motor vehicle license plate comprising the anti-counterfeiting hot stamping film according to any one of claims **1** to **10**.

## Patentansprüche

1. Fälschungssichere Heißprägefolie, umfassend eine erste Farbschicht (15), eine fälschungssichere Informationsschicht (16), eine optische Schutzschicht (17) und eine zweite Farbschicht (18), wobei die erste Farbschicht (15) und die zweite Farbschicht (18) gegenüberliegend angeordnet sind, wobei die fälschungssichere Informationsschicht (16) und die optische Schutzschicht (17) zwischen der ersten Farbschicht (15) und der zweiten Farbschicht (18) angeordnet sind; wobei
jede der ersten Farbschicht (15), der fälschungssicheren Informationsschicht (16), der optischen Schutzschicht (17) und der zweiten Farbschicht (18) ganzflächig auf der fälschungssicheren Heißprägefolie vorgesehen ist, die erste Farbschicht (15) nur unter Beleuchtung lichtdurchlässig und in Abwesenheit von Licht undurchlässig ist und die zweite Farbschicht (18) sowohl unter Beleuchtung als auch ohne Beleuchtung nicht lichtdurchlässig ist.

2. Fälschungssichere Heißprägefolie nach Anspruch 1, wobei die fälschungssichere Informationsschicht (16) auf der ersten Farbschicht (15) angeordnet ist, die optische Schutzschicht (17) auf der fälschungssicheren Informationsschicht (16) angeordnet ist, und die zweite Farbschicht (18) auf der optischen Schutzschicht (17) angeordnet ist.

3. Fälschungssichere Heißprägefolie nach Anspruch 2, wobei die fälschungssichere Informationsschicht (16) mit einer Vielzahl von Mikro-/Nanostrukturen (162) versehen ist, wobei die Mikro-/Nanostrukturen (162) unsichtbare Wasserzeichen mit einer fälschungssicheren Wirkung sind.

4. Fälschungssichere Heißprägefolie nach Anspruch 3, wobei die optische Schutzschicht (17) eine nanoskalige Dicke aufweist, die optische Schutzschicht (17) lichtdurchlässig ist und Licht reflektieren kann.

5. Fälschungssichere Heißprägefolie nach Anspruch **4**, wobei die fälschungssichere Heißprägefolie ferner eine Klebeschicht (19) umfasst, die auf der zweiten Farbschicht (18) angeordnet ist.

6. Fälschungssichere Heißprägefolie nach Anspruch **1**, wobei die fälschungssichere Heißprägefolie ferner eine Basisfolienschicht (12), eine Trennschicht (13) und eine Schutzschicht (14) umfasst, wobei die Trennschicht (13) auf der Basisfolienschicht (12) angeordnet, die Schutzschicht (14) auf der Trennschicht (13) angeordnet und die erste Farbschicht (15) auf der Schutzschicht (14) angeordnet ist.

7. Fälschungssichere Heißprägefolie nach Anspruch **6**, wobei die erste Farbschicht (15) aus einem Pigment gebildet oder aus mehreren Pigmenten gebildet ist und die zweite Farbschicht (18) aus einem Pigment oder mehreren Pigmenten gebildet ist.

8. Fälschungssichere Heißprägefolie nach Anspruch **1**, wobei die fälschungssichere Heißprägefolie ferner eine Basisfolienschicht (12) und eine Trennschicht (13) umfasst, wobei die Trennschicht (13) auf der Basisfolienschicht (12) angeordnet ist und die erste Farbschicht (15) auf der Trennschicht (13) angeordnet ist.

9. Fälschungssichere Heißprägefolie nach Anspruch **8**, wobei die erste Farbschicht (15) durch Mischen eines Pigments oder mehrerer Pigmente mit einem Schutzmaterial gebildet ist, wobei die zweite Farbschicht (18) aus einem Pigment oder einer Vielzahl von Pigmenten gebildet ist.

10. Fälschungssichere Heißprägefolie nach Anspruch **1**, wobei die Farbe der zweiten Farbschicht (18) dunkler ist als die Farbe der ersten Farbschicht (15).

11. Verfahren zur Herstellung einer fälschungssicheren Heißprägefolie nach Anspruch 6, umfassend:
Bereitstellen einer Basisfolienschicht (12);
Bilden einer Trennschicht (13) auf der Basisfolienschicht (12);
Bilden einer Schutzschicht (14) auf der Trennschicht (13);
Bilden einer ersten Farbschicht (15) auf der Schutzschicht (14);
Bilden einer fälschungssicheren Informationsschicht (16) auf der ersten Farbschicht (15);
Bilden einer optischen Schutzschicht (17) auf der fälschungssicheren Informationsschicht (16),
Bilden einer zweiten Farbschicht (18) auf der optischen Schutzschicht (17), wobei jede der ersten Farbschicht (15), der fälschungssicheren Informationsschicht (16), der optischen Schutzschicht (17) und der zweiten Farbschicht (18) ganzflächig auf der fälschungssicheren Heißprägefolie vorgesehen ist, die erste Farbschicht (15) nur unter Beleuchtung lichtdurchlässig und in Abwesenheit von Licht undurchlässig ist, und die zweite Farbschicht (18) sowohl unter Beleuchtung als auch ohne Beleuchtung nicht lichtdurchlässig ist; und Bilden einer Klebeschicht (19) auf der zweiten Farbschicht (18).

12. Verfahren zur Herstellung einer fälschungssicheren Heißprägefolie nach Anspruch 8, umfassend:
Bereitstellen einer Basisfolienschicht (12);
Bilden einer Trennschicht (13) auf der Basisfolienschicht (12);
Bilden einer ersten Farbschicht (15) auf der Trennschicht (13);
Bilden einer fälschungssicheren Informationsschicht (16) auf der ersten Farbschicht (15);
Bilden einer optischen Schutzschicht (17) auf der fälschungssicheren Informationsschicht (16);
Bilden einer zweiten Farbschicht (18) auf der optischen Schutzschicht (17), wobei jede der ersten Farbschicht (15), der fälschungssicheren Informationsschicht (16), der optischen Schutzschicht (17) und der zweiten Farbschicht (18) ganzflächig auf der fälschungssicheren Heißprägefolie vorgesehen ist, die erste Farbschicht (15) nur unter Beleuchtung lichtdurchlässig und in Abwesenheit von Licht undurchlässig ist, und die zweite Farbschicht (18) sowohl unter Beleuchtung als auch ohne Beleuchtung nicht lichtdurchlässig ist; und Bilden einer Klebeschicht (19) auf der zweiten Farbschicht (18).

13. Kraftfahrzeug-Kennzeichenschild, umfassend die fälschungssichere Heißprägefolie nach einem der Ansprüche **1** bis **10.**

## Revendications

1. Film d'estampage à chaud anti-contrefaçon, comprenant une première couche de couleur (15), une couche d'information anti-contrefaçon (16), une couche protectrice optique (17) et une seconde couche de couleur (18), la première couche de couleur (15) et la seconde couche de couleur (18) étant disposées à l'opposé une de l'autre, la couche d'information anti-contrefaçon (16) et la couche protectrice optique (17) étant disposées entre la première couche de couleur (15) et la seconde couche de couleur (18) ; dans lequel,
chacune de la première couche de couleur (15), de la couche d'information anti-contrefaçon (16), de la couche protectrice optique (17) et de la seconde couche de couleur (18) est prévue sur toute la surface du film d'estampage à chaud anti-contrefaçon, la première couche de couleur (15) n'est pénétrable à la lumière qu'à l'exposition à la lumière et impénétrable à l'abri de la lumière, et la seconde couche de couleur (18) est impénétrable à la lumière à l'exposition à la lumière et à l'abri de la lumière.

2. Film d'estampage à chaud anti-contrefaçon selon la revendication 1, dans lequel la couche d'information anti-contrefaçon (16) est disposée sur la première couche de couleur (15), la couche protectrice optique (17) est disposée sur la couche d'information anti-contrefaçon (16), et la seconde couche de couleur (18) est disposée sur la couche protectrice optique (17).

3. Film d'estampage à chaud anti-contrefaçon selon la revendication **2**, dans lequel la couche d'information anti-contrefaçon (16) est pourvue d'une pluralité de micro/nanostructures (162), les micro/nanostructures (162) sont des filigranes invisibles ayant un effet anti-contrefaçon.

4. Film d'estampage à chaud anti-contrefaçon selon la revendication 3, dans lequel la couche protectrice optique (17) présente une épaisseur nanométrique, et la couche protectrice optique (17) est pénétrable à la lumière et est capable de réfléchir la lumière.

5. Film d'estampage à chaud anti-contrefaçon selon la revendication 4, dans lequel le film d'estampage à chaud anti-contrefaçon comprend en outre une couche adhésive (19) disposée sur la seconde couche de couleur (18).

6. Film d'estampage à chaud anti-contrefaçon selon la revendication 1, dans lequel le film d'estampage à chaud anti-contrefaçon comprend en outre une couche de film de base (12), une couche de démoulage (13) et une couche protectrice (14), la couche de démoulage (13) étant disposée sur la couche de film de base (12), la couche protectrice (14) étant disposée sur la couche de démoulage (13) et la première couche de couleur (15) étant disposée sur la couche protectrice (14).

7. Film d'estampage à chaud anti-contrefaçon selon la revendication 6, dans lequel la première couche de couleur (15) est formée d'un seul pigment ou d'une pluralité de pigments, et la seconde couche de couleur (18) est formée d'un seul pigment ou d'une pluralité de pigments.

8. Film d'estampage à chaud anti-contrefaçon selon la revendication 1, dans lequel le film d'estampage à chaud anti-contrefaçon comprend en outre une couche de film de base (12) et une couche de démoulage (13), la couche de démoulage (13) étant disposée sur la couche de film de base (12), et la première couche de couleur (15) étant disposée sur la couche de démoulage (13).

9. Film d'estampage à chaud anti-contrefaçon selon la revendication 8, dans lequel la première couche de couleur (15) est formée en mélangeant un seul pigment ou une pluralité de pigments avec un matériau protecteur, et la seconde couche de couleur (18) est formée d'un seul pigment ou d'une pluralité de pigments.

10. Film d'estampage à chaud anti-contrefaçon selon la revendication 1, dans lequel la couleur de la seconde couche de couleur (18) est plus foncée que la couleur de la première couche de couleur (15).

11. Procédé de fabrication d'un film d'estampage à chaud anti-contrefaçon selon la revendication 6, comprenant :
fournir une couche de film de base (12) ;
former une couche de démoulage (13) sur la couche de film de base (12) ;
former une couche protectrice (14) sur la couche de démoulage (13) ;
former une première couche de couleur (15) sur la couche protectrice (14) ;
former une couche d'information anti-contrefaçon (16) sur la première couche de couleur (15) ;
former une couche protectrice optique (17) sur la couche d'information anti-contrefaçon (16) ;
former une seconde couche de couleur (18) sur la couche protectrice optique (17), dans lequel chacune de la première couche de couleur (15), de la couche d'information anti-contrefaçon (16), de la couche protectrice optique (17) et de la seconde couche de couleur (18) est prévue sur toute la surface du film d'estampage à chaud anti-contrefaçon, la première couche de couleur (15) n'est pénétrable à la lumière qu'à l'exposition à la lumière et impénétrable à l'abri de la lumière, et la seconde couche de couleur (18) est impénétrable à la lumière à l'exposition à la lumière et à l'abri de la lumière ; et
former une couche adhésive (19) sur la seconde couche de couleur (18).

12. Procédé de fabrication d'un film d'estampage à chaud anti-contrefaçon selon la revendication 8, comprenant :
fournir une couche de film de base (12) ;
former une couche de démoulage (13) sur la couche de film de base (12) ;
former une première couche de couleur (15) sur la couche de démoulage (13) ;
former une couche d'information anti-contrefaçon (16) sur la première couche de couleur (15) ;
former une couche protectrice optique (17) sur la couche d'information anti-contrefaçon (16) ;
former une seconde couche de couleur (18) sur la couche protectrice optique (17), dans lequel chacune de la première couche de couleur (15), de la couche d'information anti-contrefaçon (16), de la couche protectrice optique (17) et de la seconde couche de couleur (18) est prévue sur toute la surface du film d'estampage à chaud anti-contrefaçon, la première couche de couleur (15) n'est pénétrable à la lumière qu'à l'exposition à la lumière et impénétrable à l'abri de la lumière, et la seconde couche de couleur (18) est impénétrable à la lumière à l'exposition à la lumière et à l'abri de la lumière ; et
former une couche adhésive (19) sur la seconde couche de couleur (18).

13. Plaque d'immatriculation de véhicule à moteur comprenant le film d'estampage à chaud anti-contrefaçon selon l'une quelconque des revendications 1 à 10.
